# EUROPÄISCHE PATENTANMELDUNG

(11) **EP 3 818 911 A1**
(43) Veröffentlichungstag der Anmeldung: **12.05.2021**
(21) Anmeldenummer: 20202842.9
(22) Anmeldetag: 20.10.2020
(51) Int. Cl.: A47C 17/80, A47C 23/00, B60N 3/00, B60P 3/38

(54) **UNTERFEDERUNG ZUR ABSTÜTZUNG EINER MATRATZE ODER EINES POLSTERELEMENTS**

(30) Priorität: 11.11.2019 DE 202019106271 U
(71) Anmelder: Diemer & Dr. Jaspert GbR, 85630 Grasbrunn (DE)
(72) Erfinder: JASPERT, Bodo F., 85630 Grasbrunn (DE); DIEMER, Gregor, 85456 Wartenberg (DE)
(74) Vertreter: Manitz Finsterwald Patent- und Rechtsanwaltspartnerschaft mbB

(57) **Zusammenfassung**

Die vorliegende Erfindung betrifft eine Unterfederung zur Abstützung einer Matratze oder eines Polsterelements, insbesondere zur Verwendung in Fahrzeugen wie Wohnmobile oder Campinganhänger, mit einer Vielzahl von über die Abstützfläche verteilt angeordneten Einzelfederelementen mit einer jeweils einen Teil der Abstützfläche bildenden oberen Deckplatte, einem die Deckplatte elastisch abstützenden Federkörper und einem Kopplungsteil zur Kopplung des jeweiligen Einzelfederelementes mit einer Tragstruktur sowie mit Stabilisierungselementen zur Stabilisierung der Tragstruktur, wobei die Stabilisierungselemente seitlich neben den Einzelfederelementen angeordnet sind.

## Beschreibung

Die vorliegende Erfindung betrifft eine Unterfederung zur Abstützung einer Matratze oder eines Polsterelements, insbesondere zur Verwendung in Fahrzeugen wie Wohnmobile oder Campinganhänger, mit einer Vielzahl von über die Abstützfläche verteilt angeordneten Einzelfederelementen mit einer jeweils einen Teil der Abstützfläche bildenden oberen Deckplatte, einem die Deckplatte elastisch abstützenden Federkörper und einem Kopplungsteil zur Kopplung des jeweiligen Einzelfederelementes mit einer Tragstruktur, sowie mit Stabilisierungselementen zur Stabilisierung der Tragstruktur.

Insbesondere im Campingbereich ist der verfügbare Platz verhältnismäßig gering. Der Erfindung liegt daher die Aufgabe zugrunde, eine solche Unterfederung zur Verfügung zu stellen, die einen geringen Platzbedarf, insbesondere eine geringe Höhe aufweist.

Diese Aufgabe wird bei einer Unterfederung der genannten Art dadurch gelöst, dass die Stabilisierungselemente seitlich neben den Einzelfederelementen angeordnet sind.

Durch die Anordnung der Stabilisierungselemente seitlich neben den Einzelfederelementen kann die Bauhöhe der Unterfederung vorteilhafterweise verringert werden. Anders als bei bekannten Unterfederungen befinden sich also die Einzelstützelemente nicht oben auf der Tragstruktur, beispielsweise nicht auf einer Profilleiste aufgesetzt, sondern seitlich daneben.

Nach einer Ausgestaltung der Erfindung ist die Tragstruktur durch eine oder mehrere, insbesondere parallel zueinander angeordnete Profilstreben gebildet, wobei die Stabilisierungselemente in den Profilstreben selbst ausgebildet sind. Die Einzelstützelemente sind dabei jeweils seitlich an mindestens einer Seite der Profilstreben angebracht, insbesondere eingeclipst. Im Gegensatz zu bekannten Unterfederungen mit auf Profilstreben aufgesetzten Einzelstützelementen ist die Bauhöhe daher verringert. Die Stabilisierung der Profilstreben erfolgt beispielsweise durch eine entsprechend Profilierung, beispielsweise eingeformte Hohlräume oder zusätzliche Längsstreben, wobei diese Längsstreben zugleich auch zum Einclipsen der Einzelstützelemente dienen können.

Die Profilstreben bestehen bevorzugt aus Metall, insbesondere Leichtmetall wie Aluminium. Das Gewicht der Unterfederung kann dadurch vorteilhaft reduziert werden.

Nach einer anderen Ausgestaltung der Erfindung ist die Tragstruktur als Wanne ausgebildet. Die Stabilisierungselemente sind dann insbesondere zwischen den Einzelstützelementen an der Wanne angeordnet, befinden sich also wieder seitlich neben den Einzelstützelementen, sodass auch hier die Bauhöhe gering ist.

Die Stabilisierungselemente sind bevorzugt starr mit der Wanne verbunden, insbesondere stoffschlüssig, bevorzugt verklebt, und/oder durch Nieten. Dies ist in der Herstellung kostengünstig und führt zu einer stabilen Unterfederung.

Die Stabilisierungselemente können insbesondere auch in die Wanne eingeformt sein, beispielsweise durch Tiefziehen oder Falzen. Dies ist in der Herstellung besonders kostengünstig.

Nach einer weiteren Ausgestaltung der Erfindung sind in der Wanne Kopplungselemente zur Befestigung der Einzelstützelemente vorgesehen, insbesondere in die Wanne eingeprägt oder eingeformt. Dadurch ergibt sich eine kostengünstige Montagemöglichkeit für die Unterfederung.

Auch die Wanne besteht bevorzugt aus Metall, insbesondere Leichtmetall wie Aluminium. Das Gewicht kann hierdurch wiederum in vorteilhafter Weise reduziert werden.

Ausführungsbeispiele der Erfindung sind in den Zeichnungen dargestellt und werden nachfolgend beschrieben. Es zeigen, jeweils in schematischer Darstellung,
- Fig. 1: einen Abschnitt einer Unterfederung mit Profilstreben,
- Fig. 2: einen Abschnitt einer Unterfederung mit einer Wanne, und
- Fig. 3: einen Teilquerschnitt durch eine Unterfederung mit Wanne.

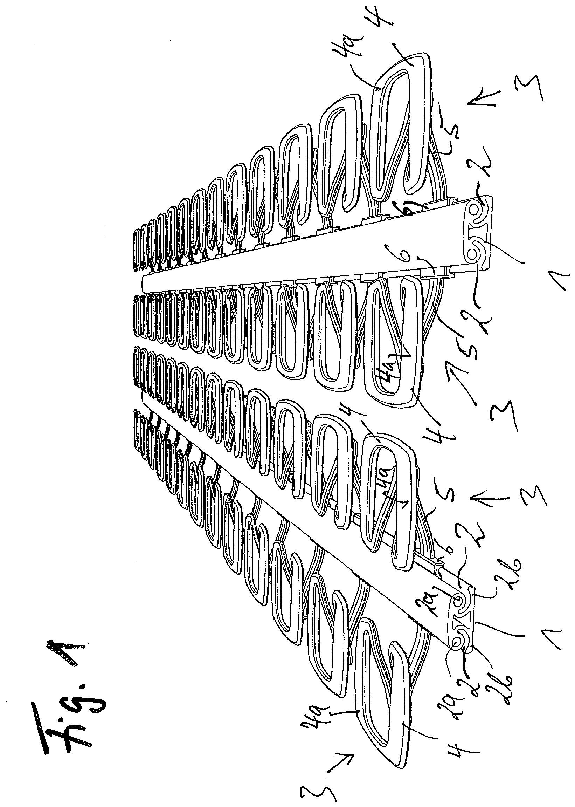

In Fig. 1 sind zwei Profilstreben 1 dargestellt, die parallel zueinander angeordnet und beidseits mit Längsnuten 2 versehen sind, in welche Einzelstützelemente 3 eingeclipst sind. Die Einzelstützelemente 3 umfassen eine obere Deckplatte 4, einen die Deckplatte 4 jeweils abstützenden Federkörper 5 und einen Kopplungsteil 6 zum Einclipsen in eine Nut 2 eines Profils 1. Wie man in Fig. 1 sieht, sind die Einzelstützelemente 3 derart ausgebildet, dass sie sich nach dem Einclipsen in ein Profil 1 seitlich zu diesem erstrecken. Die Einzelstützelemente 3 befinden sich also seitlich zu den die Profilstreben 1 zugleich gebildeten Stabilisierungselementen, sodass die Bauhöhe der damit gebildeten Unterfederung gering ist. Die Stabilisierung erfolgt dabei unter anderem durch eingeformte Hohlräume 2a und durch Längsstreben 2b, die zugleich zum Einclipsen der Einzelfederelemente 3 dienen. Die Deckplatten 4 bilden mit ihren oberen Flächen 4a gemeinsam die Abstützfläche der Unterfederung.

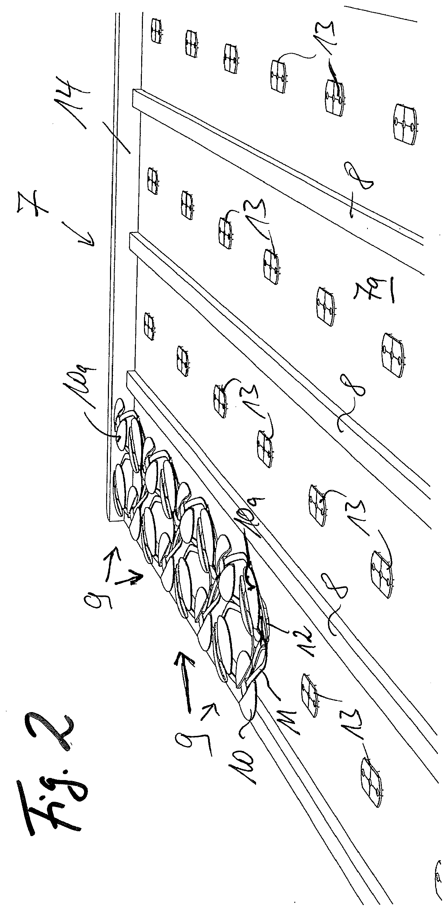

Fig. 2 zeigt einen Teil einer Wanne 7, auf welche mehrere parallel zueinander verlaufende Profile 8 aufgebracht sind. Die Profile 8 können mit der Wanne 7 verklebt und/oder vernietet sein. Es ist aber auch möglich, die Profile 8 in die Wanne 7 einzuformen, beispielsweise beim Tiefziehen der Wanne oder durch Einprägen.

Wie man in Fig. 2 sieht, sind zwischen den Stabilisierungselemente bildenden Profilstreben 8 wiederum Einzelstützelemente 9 angeordnet, wobei hier nur vier Einzelstützelemente dargestellt sind. Die Einzelstützelemente 9 umfassen wiederum eine obere Deckplatte 10, einen die Deckplatte 10 abstützenden Federkörper 11 und einen Kopplungsteil 12 zur Kopplung mit der Wanne 7. Die Wanne 7 ist hierfür mit Gegenelementen 13 ausgestattet, die mit der Wanne 7 fest verbunden oder in diese eingeformt sein können, beispielsweise wiederum durch Einprägen. Die Kopplungselemente 13 der Wanne 7 bilden beispielsweise zusammen mit den Kopplungsteilen 12 der Einzelstützelemente 9 jeweils eine Art BajonettVerbindung.

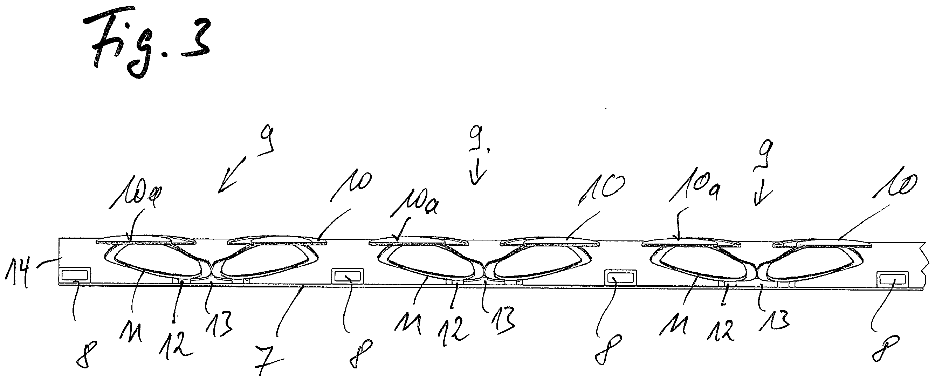

Wie man in Fig. 2 sieht, weist die Wanne 7 zudem mindestens eine Seitenwand 14 auf, die ebenfalls als Stabilisierung dient. Im Übrigen besteht auch die Wanne 7 bevorzugt aus Leichtmetall, insbesondere Aluminium. Wie man insbesondere in Fig. 3 sieht, ergibt sich durch die Anordnung der Stabilisierungselemente 8 seitlich neben den Einzelstützelementen 9 eine geringe Bauhöhe der Unterfederung.

### Bezugszeichenliste

- 1: Profilstrebe
- 2: Längsnut
- 2a: Hohlraum
- 2b: Längsstrebe
- 3: Einzelstützelement
- 4: Deckplatte
- 4a: obere Fläche der Deckplatte
- 5: Federkörper
- 6: Kopplungsteil
- 7: Wanne
- 8: Profil
- 9: Einzelstützelement
- 10: Deckplatte
- 11: Federkörper
- 12: Kopplungsteil
- 13: Kopplungselement
- 14: Wand

## Patentansprüche

1. Unterfederung zur Abstützung einer Matratze oder eines Polsterelements, insbesondere zur Verwendung in Fahrzeugen wie Wohnmobile oder Campinganhänger, mit einer Vielzahl von über die Abstützfläche verteilt angeordneten Einzelfederelementen (3, 9) mit einer jeweils einen Teil der Abstützfläche bildenden oberen Deckplatte (4, 10), einem die Deckplatte (4, 10) elastisch abstützenden Federkörper (5, 11) und einem Kopplungsteil (6, 12) zur Kopplung des jeweiligen Einzelfederelementes (3, 9) mit einer Tragstruktur (1, 7), sowie mit Stabilisierungselementen (2a, 2b; 8) zur Stabilisierung der Tragstruktur (1, 7),
**dadurch gekennzeichnet, dass**
die Stabilisierungselemente (2a, 2b; 8) seitlich neben den Einzelfederelementen (3, 9) angeordnet sind.

2. Unterfederung nach Anspruch 1,
**dadurch gekennzeichnet, dass**
die Tragstruktur durch eine oder mehre, insbesondere parallel zueinander angeordnete Profilstreben (1) gebildet ist, wobei die Stabilisierungselemente (2a, 2b) in den Profilstreben (1) selbst ausgebildet sind.

3. Unterfederung nach Anspruch 2,
**dadurch gekennzeichnet, dass**
die Profilstreben (1) aus Metall, insbesondere Leichtmetall wie Aluminium bestehen.

4. Unterfederung nach Anspruch 3,
**dadurch gekennzeichnet, dass**
die Einzelstützelemente (3) jeweils seitlich an mindestens einer Seite der Profilstreben (1) angebracht, insbesondere eingeclipst sind, bevorzugt in eine Längsnut (2) der jeweiligen Profilstrebe (1).

5. Unterfederung nach Anspruch 1,
**dadurch gekennzeichnet, dass**
die Tragstruktur als Wanne (7) ausgebildet ist.

6. Unterfederung nach Anspruch 5,
**dadurch gekennzeichnet, dass**
die Stabilisierungselemente (8) zwischen den Einzelstützelementen (9) an der Wanne (7) angeordnet sind.

7. Unterfederung nach Anspruch 5 oder 6,
**dadurch gekennzeichnet, dass**
die Stabilisierungselemente (8) mit der Wanne (7) starr verbunden sind, insbesondere stoffschlüssig, bevorzugt verklebt, und/oder durch Nieten.

8. Unterfederung nach Anspruch 6,
**dadurch gekennzeichnet, dass**
die Stabilisierungselemente (8) in die Wanne (7) eingeformt sind, insbesondere durch Tiefziehen oder Falzen.

9. Unterfederung nach einem der Ansprüche 5 bis 8,
**dadurch gekennzeichnet, dass**
in der Wanne (7) Kupplungselemente (13) zur Befestigung der Einzelstützelemente (9) vorgesehen sind, insbesondere in die Wanne (7) eingeprägt oder eingeformt.

10. Unterfederung nach einem der Ansprüche 5 bis 9,
**dadurch gekennzeichnet, dass**
die Wanne (7) aus Metall, insbesondere Leichtmetall wie Aluminium gebildet ist.
